# FASCICULE DE BREVET EUROPEEN

(11) **EP 3 433 451 B1**
(45) Date de publication et mention de la délivrance du brevet: **01.04.2020**
(21) Numéro de dépôt: 17704019.3
(22) Date de dépôt: 13.02.2017
(51) Int. Cl.: E04H 4/10, B60J 7/06, B60P 7/04, E01C 13/00

(54) **DISPOSITIF DE COUVERTURE D'UNE SURFACE COMPRENANT DES BAVETTES DE PROTECTION**
VORRICHTUNG ZUR ABDECKUNG EINER OBERFLÄCHE MIT SCHUTZKLAPPEN
DEVICE FOR COVERING A SURFACE INCLUDING PROTECTIVE FLAPS

(30) Priorité: 23.03.2016 BE 201605202
(43) Date de publication de la demande: 30.01.2019
(73) Titulaire: Becoflex, 1440 Wauthier-Braine (BE)
(72) Inventeur: COENRAETS, Benoît, 1440 Wauthier-Braine (BE)
(74) Mandataire: Connor, Marco Tom
(86) Numéro de dépôt international: PCT/EP2017/053144
(87) Numéro de publication internationale: WO 2017/162368

(56) Documents cités:
- WO-A1-2010/010152
- WO-A1-2014/068131
- FR-A1- 2 259 721

## Description

### DOMAINE DE L'INVENTION

L'invention se rapporte à un dispositif de couverture d'une surface, aisé à mettre en œuvre et répondant au mieux aux exigences de l'application concernée. En particulier, la présente invention concerne un dispositif de couverture dans lequel la couverture comprend un système de fixation particulier permettant l'ancrage réversible des bords longitudinaux de la couverture lors de son déploiement. La présente invention propose une solution pour allonger la durée de vie d'un tel dispositif.

### ARRIÈRE-PLAN TECHNOLOGIQUE

On applique des couvertures sur des surfaces pour des raisons qui dépendent de la nature de ces surfaces. Ainsi, dans le cas d'un bassin tel qu'une piscine la couverture peut éviter la pollution par des feuilles ou des animaux, peut faire économiser de l'énergie, de l'eau et des réactifs et peut ou doit assurer la sécurité des personnes en particulier des enfants. Dans un bassin de dessalement ou d'autres traitements d'un fluide, une couverture permet d'éviter la dilution de liquide due à la pluie ou l'évaporation excessive due à la chaleur.

Lorsqu'il s'agit d'un terrain de sport tel qu'un terrain de tennis externe en terre battue ou gazon, une couverture permet de le protéger contre les intempéries, et en particulier une pluie intermittente. Par ailleurs, une caisse de véhicule est couverte notamment pour assurer la stabilité de la charge à la dépression causée par le déplacement du véhicule et la protéger contre les intempéries. On utilise également des couvertures en tant que stores pour serres, jardins d'hiver ou fenêtres de véhicules afin d'éviter toute surchauffe à l'intérieur, et en tant que protection solaire pour auvents de terrasse.

Dans tous les cas de figure, on recherche généralement un dispositif de couverture économique permettant une mise à couvert et à découvert aisée, sûre, reproductible et rapide, nécessitant un minimum d'intervention humaine et, surtout, ayant une durée de vie aussi longue que possible. De nombreux dispositifs de recouvrement d'une surface ont été développés, allant des modèles basiques aux plus sophistiqués, De tels dispositifs sont décrits par exemple dans WO2014068131.

Un type de dispositif de couverture avantageux comprend un tambour motorisé monté sur un mécanisme de translation longitudinale. Celui-ci déplace le tambour au-dessus de la surface à couvrir ce qui permet littéralement de « poser » la couverture sur la surface, lors de son déploiement, en la déroulant simultanément du tambour pendant son déplacement longitudinal, puis de la soulever, lors de son retrait, en l'enroulant simultanément sur le tambour. La couverture ne glisse donc pas sur la surface ni lors de son déploiement ni lors de son retrait. Le dispositif de couverture comprend également un système de fixation de la couverture à une extrémité transversale de la surface à couvrir de sorte que la translation et la rotation du tambour entraînent le déroulement ou l'enroulement de la couverture au-dessus de la surface à couvrir.

Dans la présente demande, les termes « longitudinal » « transversal » et leurs dérivés se réfèrent respectivement à la direction de déplacement du tambour et à la direction de l'axe de révolution de celui-ci.

Il existe de tels dispositifs de couverture permettant de fixer les bords longitudinaux de la couverture lors de son déploiement et, dans certains cas, d'exercer une force de traction transversale sur celle-ci pour la tendre parfaitement. De tels dispositifs sont décrits dans WO2010/010152, WO2010/054960 et dans la demande de brevet belge BE2012/0725. Dans ces dispositifs, les bords longitudinaux de la couverture sont munis d'un jonc ou bourrelet qui est introduit dans l'ouverture orientée vers le haut d'un rail en forme de profilé de section en « U », avec une ou deux ailes refermant partiellement ladite ouverture. Le bourrelet venant se glisser sous une aile et retenue dans cette position par des moyens de fixations adéquats, permet de fixer solidement les bords longitudinaux de la couverture.

Comme décrit dans WO2010010152 et WO2014064138, le bourrelet dans de telles couvertures est typiquement formé en saillie sur un bord extérieur libre d'une bande longitudinale qui est fixée à chaque bord longitudinal de la couverture au niveau de son bord intérieur, opposé au bord extérieur. Cependant, il a été observé dans plusieurs cas, particulièrement dans des applications à l'extérieur et/ou de couvertures de piscines, que les bandes longitudinales et leur bourrelet se dégradaient très rapidement et devaient être changés à intervalles trop courts. Il est clair que, lors des déploiements et retraits d'une couverture, les bandes longitudinales et leur bourrelet sont exposés à de sévères contraintes d'abrasion et que le matériau utilisé doit être soigneusement choisi. Malgré un choix judicieux des matériaux montrant une haute résistance à l'abrasion, le problème de dégradation accélérée des bandes longitudinales et de leur bourrelet persistait.

La présente invention propose une solution à la dégradation accélérée des bandes longitudinales et leur bourrelet observée dans plusieurs dispositifs de recouvrement d'une surface par une couverture avec fixation des bords longitudinaux.

### RÉSUMÉ DE L'INVENTION

L'invention est telle que définie dans la revendication principale et des variantes préférées sont définies dans les revendications dépendantes. La présente invention comporte notamment un dispositif de couverture d'une surface comprenant :
(a) une couverture sensiblement rectangulaire comprenant une face interne et une face externe séparées l'une de l'autre par l'épaisseur de la couverture, et ayant deux bords longitudinaux opposés l'un à l'autre et deux bords transversaux opposés l'un à l'autre,
(b) une bande longitudinale comprenant un bord intérieur étant fixé à chaque bord longitudinal de la couverture, et comprenant un bord extérieur étant libre et muni d'un bourrelet en saillie, s'étendant le long dudit bord,
(c) un tambour monté à rotation apte à enrouler et dérouler la couverture, ledit tambour étant monté sur un mécanisme de translation longitudinale le long de,
(d) rails adaptés pour être placés de part et d'autre de ladite surface et constitués chacun d'un profilé ayant une ouverture sur une de ses faces et orientée à l'opposé de la surface à couvrir, ladite face comprenant au moins une aile adjacente située du côté adjacent à la surface à couvrir et fermant partiellement ladite ouverture, ledit moyen de translation permettant la translation longitudinale du tambour dans un premier sens entraînant le déroulement de la couverture et son déploiement au-dessus de la surface à couvrir avec la face interne orientée vers ladite surface et, dans un second sens, entraînant l'enroulement de la couverture et son retrait de ladite surface,
(e) une surface de renvoi pourvue de chaque côté de la surface à couvrir permettant de guider et positionner ledit bourrelet de chaque bande longitudinale de la couverture vis-à-vis l'ouverture du rail correspondant lors de la translation dans le premier sens du tambour entraînant le déroulement de la couverture,
(f) un système de verrouillage continu du bourrelet des bords longitudinaux de la couverture dans l'ouverture desdits rails, permettant, une fois que le bourrelet ait été engagé dans l'ouverture, de le verrouiller en le coinçant sous l'aile adjacente du rail correspondant au fur et à mesure du déroulement de la couverture lors de la translation du tambour dans le premier sens, D1, et, lors de la translation du tambour dans le deuxième sens, D2, de libérer le bourrelet en lui permettant de se désenclencher au fur et à mesure de l'enroulement de la couverture.

Le dispositif de la présente invention est **caractérisé en ce que** la couverture comprend au moins une bavette s'étendant le long de chacun de ses bord longitudinaux apte, lorsqu'une portion de chaque bourrelet est coincée sous l'aile adjacente du rail correspondant, à isoler la portion de la bande longitudinale correspondant à la portion de bourrelet coincé, soit de l'atmosphère régnant entre la face interne de la portion de couverture déployée et la portion de surface couverte, soit des rayons solaires.

Dans une première variante le dispositif comprend une bavette interne s'étendant de la face interne de la couverture jusqu'à une extrémité libre couvrant une partie de la bande longitudinale, sans couvrir le bourrelet, de sorte que lorsque le bourrelet est coincé sous l'aile adjacente du rail correspondant, ladite bavette interne est comprimée entre l'aile adjacente et la bande longitudinale, de préférence sans entrer ou couvrir l'ouverture du rail, et ainsi former un joint relativement étanche. Une telle bavette interne permet de protéger la bande longitudinale des vapeurs corrosives comprises sous la couverture, telles que par exemple des vapeurs de chlore, ozone, ou autres composés utilisés pour stériliser l'eau d'une piscine.

Dans une variante additionnelle ou alternative à la précédente, le dispositif comprend une bavette externe s'étendant de la face externe de la couverture jusqu'à une extrémité libre couvrant la bande longitudinale, y compris le bourrelet, de sorte que lorsque le bourrelet est coincé sous l'aile adjacente du rail correspondant, ladite bavette externe couvre la bande longitudinale, et couvre de préférence aussi l'ouverture du rail. Une telle bavette externe protège la bande longitudinale des effets oxydants des rayons solaires.

Il est préférable qu'au moins une bavette soit une partie intégrale de la couverture, le bord longitudinal de la couverture formant une extrémité libre de l'au moins une bavette. SI la couverture comprend une bavette interne et une bavette externe, au moins une bavette peut être formée par un ruban comprenant un bord interne fixé à la couverture parallèlement à chaque bord longitudinal de la couverture, et un bord externe libre formant l'extrémité libre de l'au moins une bavette. Le ruban peut être fixé à la couverture par soudure, collage, couture, agrafage, ou rivetage.

La bande longitudinale y compris le bourrelet comprend de préférence un tissu de fibres de polyethylene de masse molaire très élevée (UHMPE) (pex. Dyneema), ou de fibres de polyethylene à haute densité (PEHD), ou de fibres aramides (pex. Kevlar, Twaron), ou de fibres de polyester aromatique (pex. Vectran), et dans lequel le tissu est de préférence tressé, ou tissé, ou brodé. De tels matériaux sont résistants à l'abrasion mais peuvent être sensibles aux rayonnements UV et aux vapeurs chlorées ou ozonées s'émanant d'une piscine. La bande longitudinale peut être fixée à la couverture par couture, collage, soudure, agrafage, ou rivetage. Comme les matériaux de la couverture et de la bande longitudinale sont souvent différents, il est préférable de coudre la bande longitudinale à la couverture.

Le système de verrouillage d'un dispositif selon la présente invention comprend de préférence de plus deux courroies flexibles, chacune étant apte,
- lors de la translation du tambour dans le premier sens, à se déposer au fur et à mesure du déroulement de la couverture dans l'ouverture du rail correspondant une fois que le bourrelet ait été engagé sous l'aile adjacente de ce dernier et ainsi de l'y coincer et,
- lors de la translation du tambour dans le second sens, à se retirer de ladite ouverture, libérant ainsi le bourrelet et lui permettant de se désenclencher au fur et à mesure de l'enroulement de la couverture.

Le mécanisme de déplacement comprend de préférence un chariot monté sur les rails et surplombant transversalement la surface à couvrir et supportant le tambour comprenant à chacune de ses extrémités:
(a) une roue d'entraînement dont l'axe de rotation est parallèle à celui dudit tambour ;
(b) au moins une première roulette avale et au moins une seconde roulette amont reposant sur les rails et permettant la translation longitudinale du chariot, et étant montées la première en aval et la seconde en amont de la roue d'entraînement dans le premier sens de déplacement, et constituant avec celle-ci un triangle dont la roue d'entraînement forme un sommet supérieur;
et dans aux quatre coins de la surface à couvrir et s'étend le long des bords longitudinaux de la surface à couvrir de la manière suivante :
(c) elle coiffe la roulette avale qui la dépose dans l'ouverture du rail correspondant lorsque le chariot se déplace dans le premier sens, D1, et elle coiffe la roulette amont qui la dépose dans l'ouverture du rail correspondant lorsque le chariot se déplace dans le deuxième sens, D2, comprises entre un point de fixation et la roulette la plus proche dudit point de fixation, et
(d) elle coiffe sans glissement la roue d'entraînement dans la section centrale comprise entre les deux roulettes.

La surface de renvoi est de préférence au moins partiellement formée d'une surface intérieure d'une rainure disposée dans un patin d'enclenchement:
- ladite rainure ayant une ouverture faciale s'étendant sur une surface parallèle au rail correspondant et orientée vers la surface à couvrir,
- ladite ouverture ayant une largeur inférieure à la dimension du bourrelet se trouvant à l'intérieur de la rainure et supérieure à l'épaisseur de la bande longitudinale qui sort de la rainure par ladite ouverture, de sorte que la bande longitudinale peut glisser le long de la rainure mais le bourrelet ne peut en sortir par l'ouverture faciale, et
- ladite rainure comprend une section courbée permettant d'amener de manière tangentielle le bourrelet de la couverture dans l'ouverture et sous l'aile adjacente du rail correspondant.

Le patin d'insertion peut comprendre une poulie de renvoi sensiblement cylindrique montée à rotation selon un axe parallèle à la direction transverse de la couverture. La poulie de renvoi a une extrémité distale, éloignée de la surface à couvrir, et une extrémité proximale, adjacente à ladite surface. La section courbée de la rainure est alors formée au moins partiellement par l'extrémité distale de la poulie de renvoi contre laquelle s'appuie le bourrelet correspondant de la couverture qui enveloppe partiellement ladite poulie de renvois afin de changer d'orientation. Ainsi, l'extrémité distale de chaque poulie de renvoi située de part et d'autre de la surface à couvrir peut s'appuyer sur le bourrelet correspondant, appliquant ainsi une contrainte en traction sur la couverture dans la direction transversale lors de son déroulement, ladite contrainte étant maintenue lors du verrouillage de la couverture dans les rails.

Le dispositif de la présente invention peut comprendre de plus un palier tenseur monté à rotation sur chaque patin d'enclenchement, selon un axe de rotation transverse, de préférence normal aux bords transversaux de la couverture et qui guide le bourrelet de la couverture dans la rainure du patin d'enclenchement correspondant.

Un dispositif selon la présente invention est particulièrement utilisé pour couvrir une surface sélectionnée parmi :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre de véhicule.

### BRÈVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :
Fig.1 est une vue d'ensemble en perspective d'une surface avec le tambour en position telle qu'une partie de la surface seulement est recouverte par une couverture.
Fig.2 représente des coupes transversales d'une bande longitudinale munie d'un bourrelet fixée à un bord longitudinal d'une couverture et comprenant une ou deux bavettes interne et/ou externe de protection selon diverses variantes de la présente invention.
Fig.3 représente des coupes transversales d'un rail avec le bourrelet introduit sous une aile du rail et des moyens de verrouillage de celui-ci (a) couverture selon l'art antérieur et (b) à (d) diverses variantes de la présente invention avec une ou deux bavettes interne et/ou externe de protection.
.Fig.4 montre une vue latérale d'un chariot comprenant des moyens de translation et des moyens d'enclenchement ainsi que de fixation.
Fig.5 illustre en coupe transversale et en perspective le principe de fonctionnement des moyens d'enclenchement comprenant une poulie de renvoi et la couverture étant munie de bavettes interne et/ou externe de protection.
Fig.6 montre un exemple de patin d'enclenchement.
Fig.7 : montre (a) un patin d'enclenchement en l'absence de sa poulie et de son palier et (b) une coupe de la poulie de renvoi et palier tenseur monté sur le patin de (a).

### DESCRIPTION DÉTAILLÉE DE MODES DE RÉALISATION PARTICULIERS

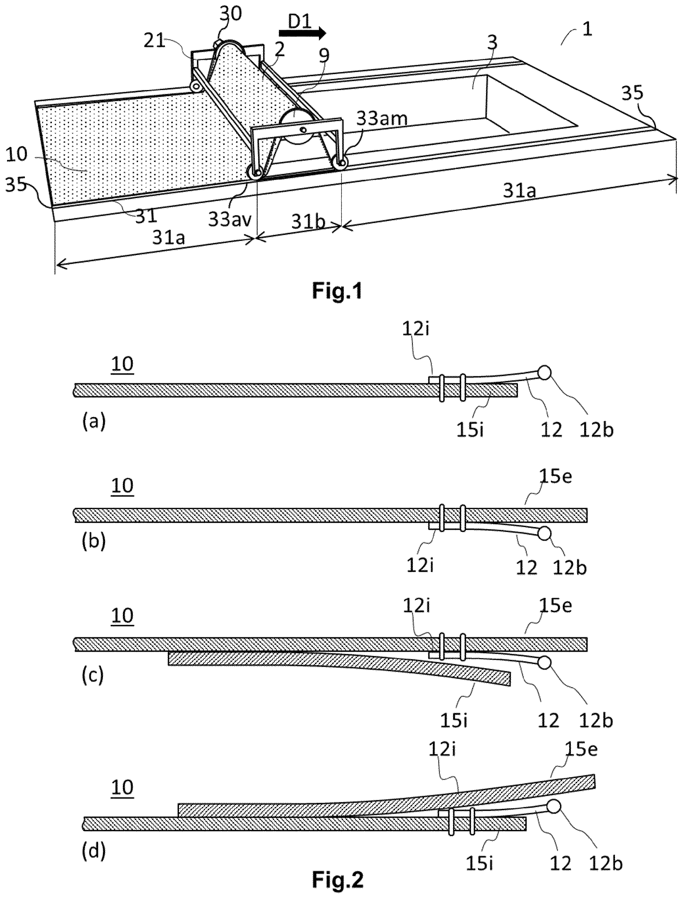

Tel que représenté à la Figure 1, le dispositif automatique de couverture (1) d'une surface (3) selon l'invention comprend une couverture (10) destinée à couvrir ladite surface (3). Le dispositif (1) permet de couvrir notamment des surfaces définies par le contour d'un bassin d'eau tel qu'une piscine, bassin de traitement d'eau, station d'épuration d'eaux usées, bassin de rétention, station de désalinisation etc. Cependant, l'invention pourra être mise en œuvre dans tout domaine nécessitant la couverture d'une surface, comme par exemple un terrain de tennis en terre battue ou en gazon, une caisse de véhicule, une surface vitrée de serre, de fenêtre de véhicule tel que train ou bus, ou de jardin d'hiver, etc. D'une manière générale, on entend donc dans la présente demande par « surface » toute zone délimitée par un périmètre.

Le dispositif (1) comprend un tambour (2) qui présente une longueur au moins égale à la largeur de la couverture (10), celle-ci devant être de largeur et de longueur suffisantes pour couvrir toute la surface à protéger (3) lorsqu'elle est déployée. Le tambour (2) est monté sur un mécanisme de translation longitudinale comprenant des rails (6) placés de part et d'autre de ladite surface (3) et permettant de déplacer le tambour dans un premier sens (D1) de translation, permettant de déployer la couverture et un second sens (D2) de translation, permettant le retrait de la couverture. Lors de la translation longitudinale du tambour (2), celui-ci a deux sens de rotation : le premier sens de rotation (lors de la translation dans le premier sens) lui permettant de dérouler la couverture (10) pour la déployer et couvrir la surface à protéger (3), et le second sens de rotation (lors de la translation dans le second sens) lui permettant d'enrouler la couverture (10) afin de la retirer et de donner accès à ladite surface (3).

Le dispositif (1) comprend en outre un système de fixation situé à une extrémité transversale de la surface à couvrir et permettant le déroulement/enroulement de la couverture au-dessus de la surface à couvrir (3) lors de la translation et la rotation du tambour (2). Tout type de système de fixation connu et convenant aux critères de contraintes et de sécurité selon l'application peut être utilisé à cet effet. Par exemple, le système de fixation peut comprendre une pluralité de sangles solidaires de l'extrémité transversale apparente de la couverture (10), lesdites sangles étant par exemple munies de crochets d'ancrage qui se fixent sur la partie transversale du contour délimitant la surface à couvrir (3). De manière alternative, on peut munir l'extrémité à fixer de la couverture d'œillets qui viennent se fixer au bord transversal de la surface par l'intermédiaire d'une série de pitons, de vis, d'un câble ou tout autre moyen. Ces moyens d'ancrage maintiennent immobilisée l'extrémité transversale apparente de la couverture (10) ce qui permet de générer sur celle-ci une traction longitudinale et de la dérouler sans devoir motoriser la rotation du tambour (2) lorsqu'il se déplace dans le premier sens (D1) pour couvrir la surface (3).

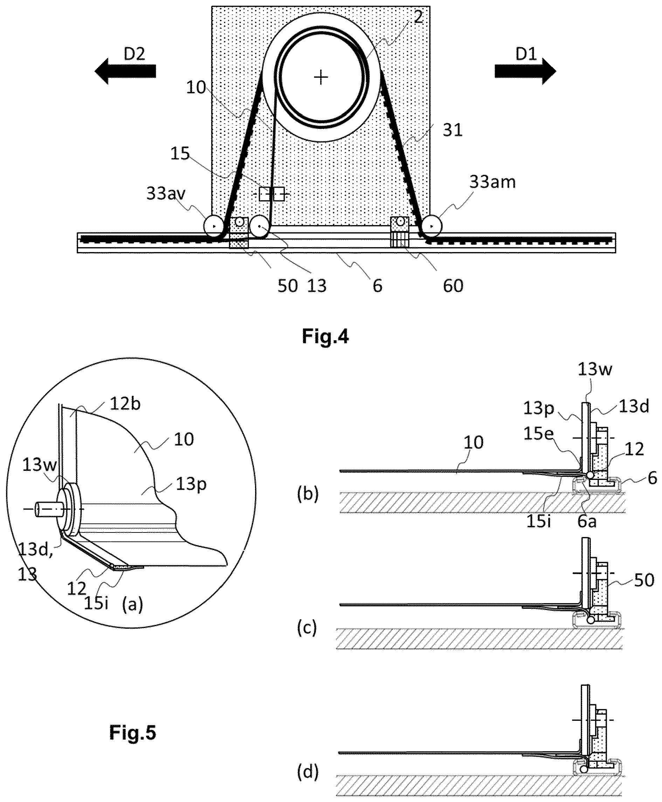

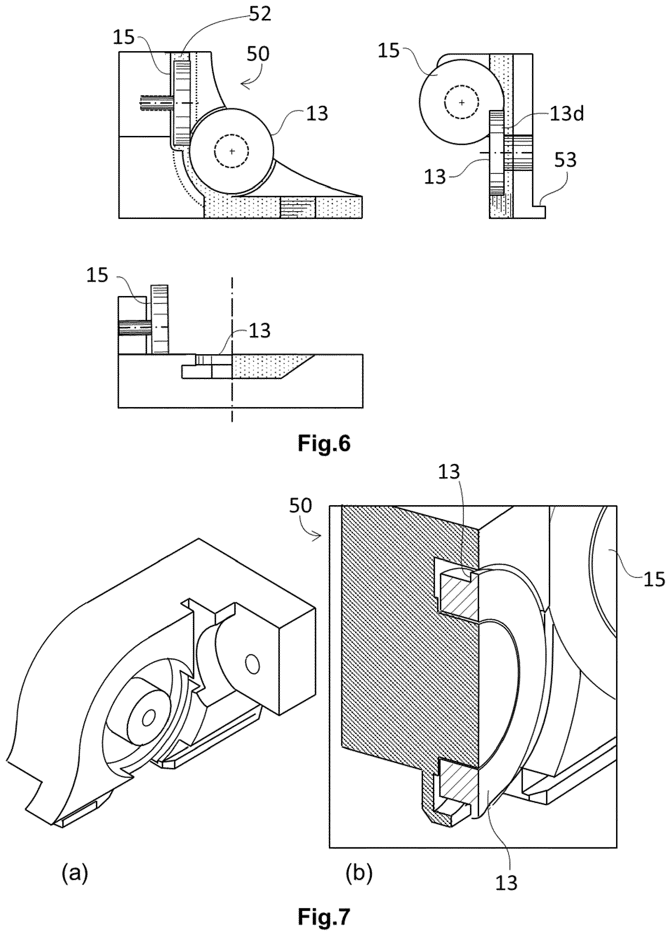

Les rails (6) placés de part et d'autre de ladite surface (3) sont constitués chacun d'un profilé ayant une ouverture (14) sur une de ses faces et orientée à l'opposé de la surface à couvrir. L'ouverture (14) est partiellement fermée par au moins une aile adjacente (6a) située du côté adjacent à la surface à couvrir. Le dispositif (1) comprend des surfaces de renvoi (13) qui peuvent être formées par une surface intérieure d'une rainure (52) et/ou une surface d'une poulie de renvoi (13w) illustrées sur les Figures 5 à 7. Les surfaces de renvois (13) permettent de changer l'orientation de la couverture qui est présentée avec un angle entre le tambour et la surface à couvrir, afin de l'orienter parallèlement à la surface à couvrir et ainsi guider le bourrelet vers l'ouverture (14) du rail correspondant (cf. Figures 5(a) et 6(a)).

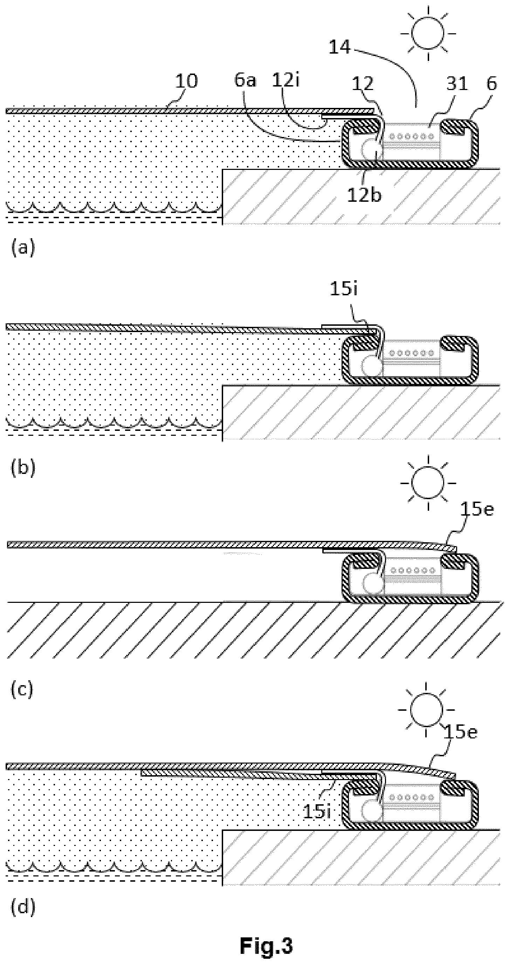

Le système de verrouillage continu du bourrelet (12b) des bords longitudinaux de la couverture (10) dans l'ouverture (14) desdits rails (6), permet, une fois que le bourrelet a été engagé dans l'ouverture, de le verrouiller en le coinçant sous l'aile adjacente (6a) du rail correspondant au fur et à mesure du déroulement de la couverture (10) (cf. Figures 3 et 5(b) à (d)) et, lors de la translation du tambour dans le second sens (D2), de libérer le bourrelet en lui permettant de se désenclencher au fur et à mesure de l'enroulement de la couverture. L'utilisation d'un patin d'enclenchement (50) permet d'assurer qu'une fois le bourrelet présenté vis-à-vis de l'ouverture (14) du rail correspondant, le bourrelet soit systématiquement guidé dans l'ouverture et sous l'aile adjacente (6a).

Le système de verrouillage comprend un moyen de fermeture partielle de l'ouverture (14) du rail dans sa portion correspondant à la portion déployée de la couverture et en ne laissant plus qu'une ouverture résiduelle. La fermeture partielle doit être telle que, d'une part, elle permette à l'épaisseur de la bande longitudinale de la couverture de passer dans l'ouverture résiduelle et, d'autre part, de ne pas permettre à l'épaisseur du bourrelet de passer à travers l'ouverture résiduelle et ainsi de verrouiller le bourrelet sous l'aile adjacente (6a) à l'intérieur du rail (6). Un tel moyen de fermeture partielle se présente de préférence sous forme d'une courroie flexible (31) de largeur légèrement inférieure à l'envergure de l'ouverture (14) et qui vient s'insérer dans l'ouverture du rail au fur et à mesure que le bourrelet (12b) est guidé sous l'aile adjacente (6a). Ainsi,
- lors de la translation du tambour dans le premier sens (D1), la courroie (31) se dépose au fur et à mesure du déroulement de la couverture (10) dans l'ouverture (14) du rail correspondant une fois que le bourrelet ait été engagé sous l'aile adjacente (6a) de ce dernier, l'y coinçant ainsi et,
- lors de la translation du tambour dans le second sens, la courroie (31) se retire de ladite ouverture (14), libérant ainsi le bourrelet et lui permettant de se désenclencher au fur et à mesure de l'enroulement de la couverture.

Comme illustré à la Figure 3(a), une fois le bourrelet verrouillé sous l'aile adjacente (6a), le bord longitudinal de la couverture (10) est maintenu fermement même en cas de sollicitations mécaniques très élevées sur la couverture (10) dues par exemple à une dépression ou à la gravitation. Dans le cas des piscines, il confère la sécurité en cas d'accès (autorisé ou non) sur la couverture. La résistance du système de verrouillage peut facilement atteindre une plage de 5 à 10 kN/m (500 à 1000 kg/m) qui est suffisante pour de nombreuses applications. Selon les matériaux utilisés, de plus hautes résistances de verrouillage peuvent être atteintes.

Cependant, il a été observé dans plusieurs cas, en particulier dans des applications en extérieur et surtout pour des couvertures de piscine, que les bandes longitudinales et leur bourrelet se dégradaient très rapidement, alors que des matériaux particulièrement résistants à l'abrasion ont été utilisés, telles des fibres de polyethylene de masse molaire très élevée (UHMPE) (par exemple du Dyneema®), ou de fibres de polyethylene à haute densité (PEHD), ou des fibres aramides (par exemple du. Kevlar® ou du Twaron®), ou des fibres de polyester aromatique (par exemple du. Vectran®). Après analyse des produits dégradés, il a été conclu que deux sources de dégradations pouvaient être considéréres : (a) le rayonnement UV du soleil et (b) les vapeurs de chlore ou ozone ou d'autre stérilisant présentes dans l'espace libre entre l'eau d'une piscine et la couverture. En effet, dans ce dernier cas, comme la couverture avec ses bords longitudinaux verrouillés forme un recouvrement essentielement étanche, la concentration de composés agressifs dans ledit espace libre peut être plus élevée que dans d'autres types de couvertures moins ou pas étanches du tout. Ces deux sources sont donc la cause de la dégradation accélérées des bandes longitudinales et leur bourrelet observée sur plusieurs installations. Sur base de ces hypothèses, la présente invention a été conçue.

Tel qu'illustré aux Figures 2 et 3(b) à (d) la présente invention consiste à munir la couverture d'au moins une bavette (15e, 15i) s'étendant le long de chacun de ses bord longitudinaux apte, lorsqu'une portion de chaque bourrelet est coincée sous l'aile adjacente (6a) du rail correspondant, à isoler la portion de la bande longitudinale correspondant à la portion de bourrelet coincé, soit (a) de l'atmosphère régnant entre la face interne de la portion de couverture déployée et la portion de surface couverte, soit (b) des rayons solaires.

Telles qu'illustrées dans les Figures 2(a), (c), (d) et 3(b), (d), des couvertures de dispositifs selon la présente invention peuvent comprendre une bavette interne (15i) s'étendant de la face interne de la couverture jusqu'à une extrémité libre couvrant une partie de la bande longitudinale, sans couvrir le bourrelet, de sorte que lorsque le bourrelet est coincé sous l'aile adjacente (6a) du rail correspondant, ladite bavette interne est comprimée entre l'aile adjacente (6a) et la bande longitudinale, de préférence sans entrer ou couvrir l'ouverture (14) du rail, et ainsi former un joint relativement étanche. Par cette solution simple mais efficace, les bandes longitudinales et leur bourrelet sont protégés de vapeurs agressives qui seraient présentes dans l'espace libre entre l'eau et la couverture dans un bassin. Comme on peut le voir dans la Figure 5, la présence d'une bavette interne (15i) n'interfère pas avec le mécanisme de verrouillage du bourrelet d'une couverture sous l'aile adjacente du rail correspondant.

Telle qu'illustrée aux Figures 2(b) à (d) et 3(c), (d), dans une variante alternative ou additionnelle, la couverture peut être munie d'une bavette externe (15e) s'étendant de la face externe de la couverture jusqu'à une extrémité libre couvrant la bande longitudinale, y compris le bourrelet, de sorte que lorsque le bourrelet est coincé sous l'aile adjacente (6a) du rail correspondant, ladite bavette externe couvre la bande longitudinale, et couvre de préférence aussi l'ouverture (14) du rail. Dans la variante représentée à la Figure 3(c), la bavette externe s'étend de sorte à couvrir toute la largeur de l'ouverture (14) et donc protéger du rayonnement solaire non seulement le bourrelet (12b), mais aussi la courroie (31) insérée dans le rail qui verrouille ainsi le bourrelet sous l'aile adjacente (6a) comme expliqué plus en détails infra. Comme on peut le voir dans la Figure 5, la présence d'une bavette externe (15e) n'interfère pas négativement ni avec la surface de renvoi ni avec le mécanisme de verrouillage du bourrelet d'une couverture sous l'aile adjacente du rail correspondant. Dans les variantes des Figures 2(c) et (d) et 3(d), la couverture est munie d'une bavette interne (15i) et d'une bavette externe (15e).

Tel qu'illustré à la Figure 2(a) à (d), il est préférable si au moins une des bavettes interne ou externe est une partie intégrale de la couverture, le bord longitudinal de la couverture formant une extrémité libre de l'au moins une bavette interne ou externe. Par exemple, la couverture de la Figure 2(a) ne comprend qu'une bavette interne (15i) qui est simplement la continuité de la couverture. A l'inverse, la couverture de la Figure 2(b) ne comprend qu'une bavette externe (15e) qui est la continuité de la couverture. La bande longitudinale (12) peut être fixée à la couverture par couture, collage, soudure, agrafage, ou rivetage. Comme les matériaux utilisés pour la bande longitudinales ne sont pas nécessairement compatibles avec les matériaux utilisés pour la couverture (par exemple, une bande longitudinale en Dyneema® (UHMPE) et une couverture en PVC, ne peuvent être soudées ou collées facilement l'une à l'autre), un couplage par couture de la bande longitudinale à la couverture est souvent préféré, tel qu'illustré à la Figure 2.

Les couvertures de la Figure 2(c)&(d) comprennent toutes les deux une bavette interne (15i) et une bavette externe (15e) dont l'une des deux bavettes interne ou externe est une partie intégrale de la couverture (10) ; à la Figure 2(c) c'est la bavette externe (15e) qui est intégrale avec la couverture et à la Figure 2(d) c'est la bavette interne (15i) qui est intégrale. L'autre bavette, qui n'est pas intégrale avec la couverture, est formée par un ruban comprenant un bord interne fixé à la couverture parallèlement à chaque bord longitudinal de la couverture, et un bord externe libre formant l'extrémité libre de cette bavette. Le ruban peut être fixé à la couverture par soudure, collage, couture, agrafage, ou rivetage. Si le ruban est constitué du même matériau que la couverture, ils peuvent être joints l'un à l'autre par soudure.

Le choix d'utiliser une bavette interne (15i), une bavette externe (15e) ou les deux, dépend de l'application de la couverture. Par exemple, la Figure 2(b) montre une couverture couvrant une piscine intérieure, ne comprenant qu'une bavette interne et pas de bavette externe, puisqu'elle n'est pas exposée aux rayonnements solaires. La bavette interne, coincée entre l'aile adjacente et la bande longitudinale, permet d'isoler la bande longitudinale des vapeurs potentiellement oxydantes qui se trouvent dans l'espace compris entre la couverture et la piscine. Le problème d'oxydation des bandes longitudinales par des vapeurs de piscine est plus marqué dans des systèmes de couverture de surfaces selon la présente invention que dans des systèmes traditionnels pour les raisons suivantes. D'une part, les vapeurs des produits stérilisants typiquement utilisés dans l'eau des piscines (chlore, ozone, etc.) s'y trouvent à plus hautes concentrations que dans des piscines couvertes par des couvertures plus conventionnelles, car les couvertures de la présente invention permettent un recouvrement de surface beaucoup plus étanche que dans la plupart des systèmes conventionnels. D'autre part, comme les bandes longitudinales sont soumises à de sévères conditions de frottements lors de leurs insertions et retraits répétés des rails, le choix de matériaux ne permet pas d'optimiser tant la résistance aux frottements et à l'oxydation. Pour ces raisons, le problème de dégradation par oxydation est donc plus important dans des systèmes de couverture selon la présente invention que dans des systèmes plus conventionnels.

La Figure 3(c) illustre une couverture couvrant une surface extérieure solide (par exemple un terrain de tennis en terre battue ou en herbe, ne comprenant qu'une bavette externe (15e) et pas de bavette interne (15i). La bavette externe (15e) protège la bande longitudinale de l'oxydation par les UV du rayonnement solaire. Comme discuté supra, si la bavette s'étend de sorte à couvrir complètement l'ouverture (14) du rail, tel qu'illustré à la Figure 3(c), la courroie (31) utilisée pour la translation du chariot et le verrouillage du bourrelet (12b) comme expliqué plus bas, est également protégé des rayonnements solaires, ce qui permet d'augmenter la durée de service des composants polymériques du système de couverture, qui peuvent être sensibles aux rayonnements solaires.

La Figure 3(d) illustre une couverture comprenant une bavette externe (15e) protégeant la bande longitudinale des rayonnements solaires et une bavette interne (15i) la protégeant des vapeurs concentrées sous la couverture. Par exemple, une telle situation peut se présenter dans le cas d'une piscine extérieure.

Afin que le bourrelet se présente dans de bonnes conditions dans l'ouverture du rail, il est préférable de prévoir des moyens de guidages du bourrelet. Un premier moyen de guidage est assuré par des surfaces de renvoi (13) qui peuvent être formées par une surface intérieure d'une rainure et/ou en une surface d'appui d'une poulie de renvoi (13w). La surface de renvoi peut être comprise dans un patin d'enclenchement, tel qu'illustré aux Figures 4, 6 et 7. Les surfaces de renvoi permettent de guider et positionner le bourrelet (12b) de chaque bord de la couverture vis-à-vis l'ouverture (14) du rail (6) correspondant lors de la translation dans le premier sens (D1) du tambour entraînant le déroulement de la couverture (cf. Figure 4).

Comme illustré aux Figures 6 et 7, la surface de renvoi (13) peut être au moins partiellement formée par une surface intérieure d'une rainure (52) disposée dans un patin d'enclenchement (50), telle que.
- ladite rainure a une ouverture faciale s'étendant sur une surface parallèle au rail (6) correspondant et orientée vers la surface à couvrir,
- ladite ouverture a une largeur inférieure à la dimension du bourrelet (12b) se trouvant à l'intérieur de la rainure et supérieure à l'épaisseur de la couverture (10) qui sort de la rainure par ladite ouverture, de sorte que la couverture peut glisser le long de la rainure mais le bourrelet ne peut en sortir par l'ouverture faciale, et
- ladite rainure comprend une section courbée permettant d'amener de manière tangentielle le bourrelet de la couverture (10) sous l'aile adjacent (6a) du rail correspondant.

Dans une variante préférée, le patin d'insertion comprend une poulie de renvoi (13w) sensiblement cylindrique montée à rotation selon un axe parallèle à la direction transverse de la couverture (cf. Figures 5 à 7). Cette poulie de renvoi comprend une extrémité distale (13d), éloignée de la surface à couvrir, et une extrémité proximale (13p), adjacente à ladite surface à couvrir (cf. Figure 5(b)). La section courbée de la surface de renvoi décrite plus haut est alors formée au moins partiellement par l'extrémité distale (13d) de la poulie de renvoi contre laquelle s'appuie le bourrelet correspondant de la couverture qui enveloppe partiellement ladite poulie de renvoi afin de changer d'orientation. Un exemple d'arrangement d'un patin d'enclenchement comprenant une poulie de renvoi est représenté dans les Figures 6 et 7. Une poulie de renvoi permet également de soumettre la couverture à une tension transversale lors du verrouillage telle que discuté ci-dessous. L'important est que l'extrémité distale (13d) de la poulie (13w) offre une surface (13) de renvoi contre laquelle le bourrelet peut s'appuyer et être retenu. On peut voir à la Figure 5(b)-(d) que la bavette externe (15e) ne pénètre pas dans la rainure et s'appuie sur l'extrémité proximale (13p) de la poulie de renvoi (13w) et n'interfère donc pas avec le guidage du bourrelet sous l'aile adjacente du rail correspondant.

Dans une forme préférée, la couverture est soumise à une tension transversale lors de son déploiement, afin de garantir un aspect lisse, stable et esthétique. Afin d'insérer les bourrelets (12b) dans les ouvertures des rails (6) en appliquant une telle tension transversale sur la couverture, celle-ci, enveloppe chaque surface de renvois (13), tel que le bourrelet (12b) s'appuie sur une surface intérieure d'une rainure ou sur la surface de l'extrémité distale (13d) d'une poulie de renvoi (13w). Afin d'assurer un tel positionnement des bourrelets (12b) par rapport aux surfaces de renvois (13), le système peut comprendre des paliers tenseurs (15) montés à rotation selon un axe de rotation transverse, de préférence normal aux bords transversaux de la couverture et qui guident les bourrelets de la couverture vers les surfaces de renvoi (13) du patin d'enclenchement correspondant. Chaque palier tenseur (15) peut être avantageusement placé entre la surface de renvoi (13) d'un patin d'enclenchement correspondant et le tambour, afin d'amener et de positionner le bourrelet de la couverture contre la surface de renvoi (13) (cf. Figure 4). De manière préférée, un palier tenseur est monté directement sur chaque patin d'enclenchement (50) (cf. Figures 6&7),

Le patin d'enclenchement des Figures 6&7 comprend un palier tenseur (15) monté à rotation sur un axe transverse (normal ou pas) aux bords transversaux de la couverture et est apte à appliquer une tension transversale sur la couverture et à guider un bourrelet de celle-ci dans la rainure (13) du patin dont une surface interne forme la surface de renvoi. A partir du moment où un bourrelet de la couverture contacte le palier tenseur jusqu'à son enclenchement et verrouillage dans le rail, la couverture est maintenue sous tension transversale, ce qui donne un aspect lisse à la partie de couverture déjà déployée en aval du tambour. Les bavettes restent à l'extérieur des paliers tenseurs et n'interfèrent donc pas avec la tension transversale de la couverture.

Dans certains cas, il n'est pas désirable d'appliquer une tension transversale à la couverture. Par exemple, dans le cas de couvertures flottantes recouvrant une piscine, aucune tension transversale n'est appliquée sur la couverture. De même, dans le cas où la couverture comprendrait une fenêtre ou ouverture, dépourvue de matière, aucune tension transversale ne pourrait être appliquée sur cette portion de la couverture. Dans de tels cas, il suffit de ne pas utiliser de paliers tenseurs (15) ou alors de les placer à une distance inférieure ou égale à la largeur de la couverture. Même si aucune tension transversale ne doit être appliquée sur la couverture, les surfaces de renvoi demeurent avantageuses au guidage des deux bourrelets vers l'intérieur du rail. Il suffit simplement de les séparer l'une de l'autre d'une distance inférieure à la largeur de la couverture, pour qu'elles n'appliquent pas de tension transversale à la couverture autre que son propre poids.

Dans une variante particulièrement préférée de la présente invention, outre leur fonction de verrouillage continu du bourrelet (12b), les courroies (31) participent également à la translation du tambour (2) qui est de préférence monté à rotation sur un chariot (21) monté sur les rails (6) et surplombant transversalement la surface (3) à couvrir. Dans une telle variante, telle que représentée aux Figures 1 et 4, ledit chariot comprend à chacune de ses extrémités,
(a) une roue d'entraînement (9) dont l'axe de rotation est parallèle à celui dudit tambour (2);
(b) au moins une première roulette aval (33av) et au moins une seconde roulette amont (33am) reposant sur les rails (6) et permettant la translation longitudinale du chariot (21), et étant montées la première en aval et la seconde en amont de la roue d'entraînement (9) dans le premier sens (D1) de déplacement, et constituant avec celle-ci un triangle dont la roue d'entraînement (9) forme le sommet supérieur (ou le plus distant de la surface à couvrir).

Chacune des deux courroies flexibles (31) est fixée uniquement à chacune de ses extrémités (35) aux quatre coins de la surface à couvrir et s'étend le long de chacun des bords longitudinaux de la surface à couvrir de la manière suivante :
(c) Chaque courroie (31) coiffe sans glissement la roue d'entraînement (9) dans la section centrale (31b) comprise entre les deux roulettes (33av, 33am) et
(d) Chaque courroie est disposée dans l'ouverture (14) des rails (6) dans les sections latérales (31a) comprises entre un point de fixation (35) et la roulette (33av, 33am) la plus proche dudit point de fixation.

Afin d'éviter tout glissement entre les courroies (31) et les roues d'entraînement (9), la surface de chaque courroie entrant en contact avec la roue d'entraînement comprend de préférence un crénelage qui s'engage dans un crénelage correspondant sur la roue d'entraînement. Alternativement, les courroies peuvent être sous forme de chaînes, ou avoir une face rugueuse permettant d'éviter tout glissement avec la roue d'entraînement (9). Des systèmes de translation et verrouillage du type présenté ci-dessus sont décrits par exemple dans WO2010010152, WO2010054960, et demande de brevet belge BE2012/0725.

Dans la section latérale (31a) en aval du chariot dans le premier sens (D1) de translation (i.e., définie entre un point de fixation (35) et la roulette avale (33av) du chariot), la courroie (35) agit également comme système de verrouillage du bourrelet, tel que discuté plus haut. Le patin d'enclenchement (50) est alors situé entre ladite roulette aval (33av) et la poulie de renvois (13) correspondantes tel que représenté à la Figure 4.

Bien qu'un profil en G pour les rails (6) comprenant une aile uniquement sur un coté de l'ouverture (14), soit suffisante pour permettre un verrouillage du bourrelet (12b) selon la présente invention, un profil en C est préféré, comprenant outre l'aile adjacente (6a) une deuxième aille distale séparée de la surface à couvrir par l'ouverture (14) et l'aile adjacente (6a) et fermant partiellement le côté opposé de l'ouverture (14) laissée par l'aile adjacente (6a). Un tel profil permet de mieux solidariser le mécanisme de translation aux rails en prévoyant que chaque patin d'enclenchement (50) comprenne un ressaut (53) en saillie s'étendant sous l'aile distale du rail correspondant. Ce ressaut empêche ledit patin d'enclenchement (50) et donc ledit mécanisme de translation longitudinale auquel il est fixé, de sortir de l'ouverture du rail correspondant. Le ressaut (53) peut également être glissé sous l'aile adjacente (6a) mais le patin sera plus stable si le ressaut est glissé sous l'aile distale, puisque la couverture soumet les patins à des forces orientées vers la surface à couvrir et tendent à faire pivoter les patins vers la couverture.

Afin de mieux encore solidariser le chariot (21) aux rails, le dispositif comprend de préférence un patin de fixation (60) inséré à glissement dans chaque rail, en aval de la roulette amont (33am) et en amont du patin d'enclenchement (50) dans le premier sens (D1) de translation (cf. Figure 4). Un tel patin de fixation (60) est semblable au patin d'enclenchement (50) mais dépourvu de rainure (52) inutile puisque le patin de fixation (60) n'entre à aucun moment en contact ni avec la couverture (10), ni avec le bourrelet (12b).

Un dispositif selon la présente invention permet de préférence les opérations suivantes illustrées à la Figure 4:
(a) lors du déroulement de la couverture (= déploiement de la couverture), le bourrelet (12b) de chaque bord longitudinal de la couverture est guidé et maintenu en vis-à-vis de l'ouverture (14) du rail (6) correspondant au fur et à mesure que le chariot avance dans le premier sens (D1), grâce à l'action des surfaces de renvoi (13) et optionnellement de paliers tenseurs (15) ;
(b) Le bourrelet est alors introduit dans l'ouverture (14) du rail et guidé sous l'aile adjacente (6a) dudit rail, où
(c) le bourrelet y est bloqué par l'insertion immédiatement après dans la même ouverture de la section latérale (31a) de courroie directement adjacente à la roulette aval (33av) en aval du premier sens (D1) de translation du chariot.et
(d) lors du ré-enroulement de la couverture (= retrait de la couverture), la section centrale de courroie (31b) directement adjacente à la roulette aval (33av) en amont du sens de translation du chariot dans le second sens (D2) est retirée de ladite ouverture (14) du rail, permettant ainsi au bourrelet (12b) de se dégager du rail et rendant possible le ré-enroulement de la couverture sur le tambour (2) du chariot.

Le déplacement du tambour le long d'une surface à couvrir ou découvrir se produit généralement à une vitesse sensiblement constante. Les roues d'entraînement (9) doivent donc tourner à une vitesse de rotation sensiblement constante. Cependant, surtout pour des surfaces de dimensions longitudinales importantes, les diamètres extérieurs du tambour lorsque la couverture est déployée ou retirée peuvent varier considérablement. Comme la vitesse de déploiement/retrait de la couverture dépend de la vitesse de rotation des roues d'entraînement (qui demeure généralement constante) et comme le diamètre extérieur du tambour varie avec la portion de couverture qui y est enroulée, il s'en suit que le tambour et les roues d'entraînement (9) ne peuvent tourner à la même vitesse tout au long de la translation du tambour. Pour des couvertures de petites dimensions, il est parfois possible de compenser les différences de vitesse par une traction sur la couverture. Pour des couvertures de dimensions longitudinales plus importantes, comme pour une piscine ou une remorque d'un semi-remorque, il est nécessaire de prévoir des moyens de modification de la vitesse relative de rotation entre le tambour d'enroulement/déroulement de la couverture et l'axe de rotation des roues d'entraînement (9). Ces moyens peuvent inclure un ressort spiralé placé à l'intérieur du tambour (2) permettant de compenser la différence entre la vitesse de rotation des roues d'entraînement, qui doit rester sensiblement constante, et la vitesse de rotation du tambour, qui varie avec le diamètre extérieur du tambour au fur et à mesure que la couverture est enroulée/déroulée. Lors du déploiement de la couverture, le tambour tourne spontanément dû à la tension créée par la couverture qui est fixée à un bord transversal de la surface à couvrir. Si le ressort spiralé se tend pendant le déploiement de la couverture (10) sur la surface, il n'est pas nécessaire de motoriser la rotation du tambour non plus lors du ramassage et ré-enroulement de la couverture autour du tambour, dont la rotation est conduite par la détente du ressort spiralé. Ce système est très avantageux car il ne nécessite pas de deuxième moteur ou d'un système d'engrenages ou de contrôle électronique pour tourner le tambour à la vitesse adéquate.

Une tension longitudinale peut être appliquée à la couverture lors de son déploiement simplement en s'assurant que la vitesse de déroulement de la couverture par la rotation du tambour soit inférieure à la vitesse de translation longitudinale du tambour, soit par l'intermédiaire d'un frein ou d'un ressort dans le système de rotation du tambour tel que discuté supra, soit par un contrôle motorisé différencié des mouvements de rotation et translation du tambour. Si ces deux vitesses sont synchrones, la couverture sera déployée sans d'autres tensions que celles générées par son poids propre dans le cas de la couverture d'une surface comprenant une cavité telle qu'une piscine.

La couverture peut être en toute matière convenant à l'application en question : matériaux textiles synthétiques ou naturels, films polymériques, etc. Elle peut être transparente, opaque ou translucide et peut former une barrière à des fluides ou au contraire être poreuse, voir même comprendre des mailles telles que dans un filet. Par exemple, pour des applications de piscines ou de bassins de traitement d'eau ou similaire, il est possible de fournir à la couverture des trous de drainage permettant ainsi à l'eau de pluie de ne pas s'accumuler sur la couverture et évitant ainsi la formation de poches d'eau sur la surface de la couverture.

Un système de couverture selon la présente invention est particulièrement adapté au recouvrement de surfaces telles que :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule, telle une remorque,
(d) une surface vitrée telle une serre, un jardin d'hiver ou une fenêtre de véhicule.

Grâce aux bavettes internes (15i) et/ou externes (15e) de la présente invention, les bandes longitudinales (12) et leur bourrelet (12b) respectifs d'une couverture sont protégés de l'exposition à des conditions dégradantes, notamment oxydantes, telles que des rayonnement UV d'origine solaire ou de vapeurs de composés corrosifs dans l'espace séparant la couverture de l'eau d'une piscine contenant des produits chimiques stérilisant. La vie de la couverture en est rallongée sensiblement pour le confort des utilisateurs et l'économie des installateurs.

## Revendications

1. Dispositif (1) de couverture d'une surface (3) comprenant :
(a) une couverture (10) sensiblement rectangulaire comprenant une face interne et une face externe séparées l'une de l'autre par l'épaisseur de la couverture, et ayant deux bords longitudinaux opposés l'un à l'autre et deux bords transversaux opposés l'un à l'autre,
(b) une bande longitudinale **(12)** comprenant un bord intérieur **(12i)** étant fixé à chaque bord longitudinal de la couverture, et comprenant un bord extérieur étant libre et muni d'un bourrelet **(12b)** en saillie, s'étendant le long dudit bord,
(c) un tambour (2) monté à rotation apte à enrouler et dérouler la couverture (10), ledit tambour (2) étant monté sur un mécanisme de translation longitudinale le long de,
(d) rails (6) adaptés pour être placés de part et d'autre de ladite surface (3) et constitués chacun d'un profilé ayant une ouverture (14) sur une de ses faces et orientée à l'opposé de la surface à couvrir, ladite face comprenant au moins une aile adjacente (6a) située du côté adjacent à la surface à couvrir et fermant partiellement ladite ouverture (14), ledit moyen de translation permettant la translation longitudinale du tambour dans un premier sens entraînant le déroulement de la couverture et son déploiement au-dessus de la surface à couvrir (3) avec la face interne orientée vers ladite surface et, dans un second sens, entraînant l'enroulement de la couverture et son retrait de ladite surface (3),
(e) une surface de renvoi pourvue de chaque côté de la surface à couvrir permettant de guider et positionner ledit bourrelet de chaque bande longitudinale de la couverture vis-à-vis l'ouverture (14) du rail (6) correspondant lors de la translation dans le premier sens du tambour entraînant le déroulement de la couverture,
(f) un système de verrouillage continu du bourrelet (12b) des bords longitudinaux de la couverture (10) dans l'ouverture (14) desdits rails (6), permettant, une fois que le bourrelet ait été engagé dans l'ouverture, de le verrouiller en le coinçant sous l'aile adjacente (6a) du rail correspondant au fur et à mesure du déroulement de la couverture (10) lors de la translation du tambour dans le premier sens (D1) et, lors de la translation du tambour dans le deuxième sens (D2) de libérer le bourrelet en lui permettant de se désenclencher au fur et à mesure de l'enroulement de la couverture,
**caractérisé en ce que** la couverture comprend au moins une bavette (15e, 15i) s'étendant le long de chacun de ses bord longitudinaux apte, lorsqu'une portion de chaque bourrelet est coincée sous l'aile adjacente (6a) du rail correspondant, à isoler la portion de la bande longitudinale correspondant à la portion de bourrelet coincé, soit de l'atmosphère régnant entre la face interne de la portion de couverture déployée et la portion de surface couverte, soit des rayons solaires.

2. Dispositif selon la revendication 1, comprenant une bavette interne (15i) s'étendant de la face interne de la couverture jusqu'à une extrémité libre couvrant une partie de la bande longitudinale, sans couvrir le bourrelet, de sorte que lorsque le bourrelet est coincé sous l'aile adjacente (6a) du rail correspondant, ladite bavette interne est comprimée entre l'aile adjacente (6a) et la bande longitudinale, de préférence sans entrer ou couvrir l'ouverture (14) du rail, et ainsi former un joint relativement étanche.

3. Dispositif selon la revendication 1 ou 2, comprenant une bavette externe (15e) s'étendant de la face externe de la couverture jusqu'à une extrémité libre couvrant la bande longitudinale, y compris le bourrelet, de sorte que lorsque le bourrelet est coincé sous l'aile adjacente (6a) du rail correspondant, ladite bavette externe couvre la bande longitudinale, et couvre de préférence aussi l'ouverture (14) du rail.

4. Dispositif selon l'une quelconque des revendications précédentes, dans lequel au moins une bavette est une partie intégrale de la couverture, le bord longitudinal de la couverture formant une extrémité libre de l'au moins une bavette.

5. Dispositif selon l'une quelconque des revendications précédentes, dans lequel au moins une bavette est formée par un **ruban** comprenant un **bord interne** fixé à la couverture parallèlement à chaque bord longitudinal de la couverture, et un **bord externe** libre formant l'extrémité libre de l'au moins une bavette.

6. Dispositif selon la revendication précédente, dans lequel le ruban est fixé à la couverture par soudure, collage, couture, agrafage, ou rivetage.

7. Dispositif selon l'une quelconque des revendications précédentes, dans lequel la bande longitudinale (12) y compris le bourrelet comprend un tissu de fibres de polyethylene de masse molaire très élevée respectivement UHMPE pex. Dyneema, ou de fibres de polyethylene à haute densité respectivement PEHD, ou de fibres aramides pex. Kevlar, Twaron, ou de fibres de polyester aromatique pex. Vectran, et dans lequel le tissu est de préférence tressé, ou tissé, ou brodé.

8. Dispositif selon la revendication précédente, dans lequel la bande longitudinale (12) est fixée à la couverture par couture, collage, soudure, agrafage, ou rivetage.

9. Dispositif selon l'une quelconque des revendications précédentes, dans lequel le système de verrouillage comprend de plus deux courroies flexibles (31), chacune étant apte,
• lors de la translation du tambour dans le premier sens, à se déposer au fur et à mesure du déroulement de la couverture (10) dans l'ouverture (14) du rail correspondant une fois que le bourrelet (12) ait été engagé sous l'aile adjacente (6a) de ce dernier et ainsi de l'y coincer et,
• lors de la translation du tambour dans le second sens, à se retirer de ladite ouverture (14), libérant ainsi le bourrelet et lui permettant de se désenclencher au fur et à mesure de l'enroulement de la couverture.

10. Dispositif selon la revendication précédente, dans lequel le mécanisme de déplacement comprend un chariot (21) monté sur les rails (6) et surplombant transversalement la surface (3) à couvrir et supportant le tambour (2) comprenant à chacune de ses extrémités:
(a) une roue d'entraînement (9) dont l'axe de rotation est parallèle à celui dudit tambour (2);
(b) au moins une première roulette avale (33av) et au moins une seconde roulette amont (33am) reposant sur les rails (6) et permettant la translation longitudinale du chariot (21), et étant montées la première en aval et la seconde en amont de la roue d'entraînement (9) dans le premier sens de déplacement, et constituant avec celle-ci un triangle dont la roue d'entraînement (9) forme un sommet supérieur;
et dans lequel chacune des deux courroies flexibles (31) est fixées uniquement à chacune de ses extrémités (35) aux quatre coins de la surface à couvrir et s'étend le long des bords longitudinaux de la surface à couvrir de la manière suivante :
(c) elle coiffe la roulette avale (33av) qui la dépose dans l'ouverture du rail (6) correspondant lorsque le chariot se déplace dans le premier sens, D1, et elle coiffe la roulette amont (33am) qui la dépose dans l'ouverture du rail (6) correspondant lorsque le chariot se déplace dans le deuxième sens, D2,
(d) elle est disposées dans l'ouverture (14) des rails (6) dans les sections latérales (31a) comprises entre un point de fixation (35) et la roulette (33av, 33am) la plus proche dudit point de fixation, et
(e) elle coiffe sans glissement la roue d'entraînement (9) dans la section centrale (31b) comprise entre les deux roulettes (33av, 33am).

11. Dispositif de couverture selon l'une quelconque des revendications précédentes dans lequel la surface de renvoi est au moins partiellement formée d'une surface intérieure d'une rainure (52) disposée dans un patin d'enclenchement (50):
• ladite rainure ayant une ouverture faciale s'étendant sur une surface parallèle au rail (6) correspondant et orientée vers la surface à couvrir,
• ladite ouverture ayant une largeur inférieure à la dimension du bourrelet (12b) se trouvant à l'intérieur de la rainure et supérieure à l'épaisseur de la bande longitudinale qui sort de la rainure par ladite ouverture, de sorte que la bande longitudinale peut glisser le long de la rainure mais le bourrelet ne peut en sortir par l'ouverture faciale, et
• ladite rainure comprend une section courbée permettant d'amener de manière tangentielle le bourrelet de la couverture (10) dans l'ouverture (14) et sous l'aile adjacente (6a) du rail correspondant.

12. Dispositif de couverture selon la revendication précédente, dans lequel le patin d'insertion comprend une poulie de renvoi (13) sensiblement cylindrique montée à rotation selon un axe parallèle à la direction transverse de la couverture, ladite poulie de renvoi ayant une extrémité distale (13d), éloignée de la surface à couvrir, et une extrémité proximale (13p), adjacente à ladite surface, et dans lequel la section courbée de la rainure est formée au moins partiellement par l'extrémité distale (13d) de la poulie de renvoi contre laquelle s'appuie le bourrelet correspondant de la couverture qui enveloppe partiellement ladite poulie de renvois (13) afin de changer d'orientation.

13. Dispositif de couverture selon la revendication 12, dans lequel l'extrémité distale (13d) de chaque poulie de renvoi (13) située de part et d'autre de la surface à couvrir s'appuie sur le bourrelet (12b) correspondant, appliquant ainsi une contrainte en traction sur la couverture dans la direction transversale lors de son déroulement, ladite contrainte étant maintenue lors du verrouillage de la couverture (10) dans les rails (6).

14. Dispositif de couverture selon l'une quelconque des revendications 9 à 11, comprenant de plus un palier tenseur (15) monté à rotation sur chaque patin d'enclenchement (50), selon un axe de rotation transverse, de préférence normal aux bords transversaux de la couverture et qui guide le bourrelet de la couverture dans la rainure (13) du patin d'enclenchement correspondant.

15. Utilisation d'un dispositif selon l'une quelconque des revendications précédentes pour couvrir une surface (3) sélectionnée parmi :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre de véhicule.

## Patentansprüche

1. Vorrichtung (1) zur Abdeckung einer Oberfläche (3), umfassend:
(a) eine im Wesentlichen rechteckige Abdeckung (10), die eine Innenseite und eine Außenseite umfasst, die durch die Dicke der Abdeckung voneinander getrennt sind, und zwei einander gegenüberliegende Längsränder und zwei einander gegenüberliegende Querränder aufweist,
(b) einen Längsstreifen (12), der einen Innenrand (12i) umfasst, der an jedem Längsrand der Abdeckung befestigt ist, und einen Außenrand umfasst, der frei ist und mit einem vorstehenden Wulst (12b) versehen ist, der sich entlang des Randes erstreckt,
(c) eine drehbar gelagerte Trommel (2), die geeignet ist, die Abdeckung (10) aufzuwickeln und abzuwickeln, wobei die Trommel (2) auf einem Mechanismus zur Längstranslation angebracht ist,
(d) Schienen (6), die dafür ausgelegt sind, beiderseits der Oberfläche (3) angeordnet zu werden, und jeweils aus einem Profil bestehen, das auf einer seiner Seiten eine Öffnung (14) aufweist, die von der abzudeckenden Oberfläche abgewandt ist, wobei diese Seite wenigstens einen angrenzenden Schenkel (6a) aufweist, der sich auf der der abzudeckenden Oberfläche benachbarten Seite befindet und die Öffnung (14) teilweise verschließt, wobei das Translationsmittel die Längstranslation der Trommel in einer ersten Richtung ermöglicht, die das Abwickeln der Abdeckung und ihre Ausbreitung über der abzudeckenden Oberfläche (3) zur Folge hat, wobei die Innenseite dieser Oberfläche zugewandt ist, und in einer zweiten Richtung, die das Aufwickeln der Abdeckung und ihr Zurückziehen von der Oberfläche (3) zur Folge hat,
(e) eine auf jeder Seite der abzudeckenden Oberfläche vorgesehene Umlenkfläche, die es ermöglicht, während der Translation der Trommel in der ersten Richtung, welche das Abwickeln der Abdeckung zur Folge hat, den Wulst jedes Längsstreifens der Abdeckung zu führen und gegenüber der Öffnung (14) der entsprechenden Schiene (6) zu positionieren,
(f) ein System zur kontinuierlichen Verriegelung des Wulstes (12b) der Längsränder der Abdeckung (10) in der Öffnung (14) der Schienen (6), welches ermöglicht, nachdem der Wulst in die Öffnung eingeführt worden ist, ihn zu verriegeln, indem er beim Abwickeln der Abdeckung (10) während der Translation der Trommel in der ersten Richtung (D1) nach und nach unter dem angrenzenden Schenkel (6a) der entsprechenden Schiene festgeklemmt wird, und während der Translation der Trommel in der zweiten Richtung (D2) den Wulst freizugeben, indem ihm ermöglicht wird, sich beim Aufwickeln der Abdeckung nach und nach aus dem Eingriff zu lösen,
**dadurch gekennzeichnet, dass** die Abdeckung wenigstens eine Klappe (15e, 15i) umfasst, die sich entlang jedes ihrer Längsränder erstreckt und in der Lage ist, wenn ein Abschnitt jedes Wulstes unter dem angrenzenden Schenkel (6a) der entsprechenden Schiene festgeklemmt ist, den Abschnitt des Längsstreifens, der dem festgeklemmten Wulstabschnitt entspricht, entweder von der zwischen der Innenseite des ausgebreiteten Abdeckungsabschnitts und dem abgedeckten Oberflächenabschnitt vorhandenen Atmosphäre oder von Sonnenstrahlen zu isolieren.

2. Vorrichtung nach Anspruch 1, welche eine innere Klappe (15i) umfasst, die sich von der Innenseite der Abdeckung bis zu einem freien Ende erstreckt und einen Teil des Längsstreifens bedeckt, ohne den Wulst zu bedecken, so dass, wenn der Wulst unter dem angrenzenden Schenkel (6a) der entsprechenden Schiene festgeklemmt ist, die innere Klappe zwischen dem angrenzenden Schenkel (6a) und dem Längsstreifen zusammengedrückt wird, vorzugsweise ohne in die Öffnung (14) der Schiene einzudringen oder sie zu bedecken, und so eine relativ dichte Abdichtung bildet.

3. Vorrichtung nach Anspruch 1 oder 2, welche eine äußere Klappe (15e) umfasst, die sich von der Außenseite der Abdeckung bis zu einem freien Ende erstreckt und den Längsstreifen einschließlich des Wulstes bedeckt, so dass, wenn der Wulst unter dem angrenzenden Schenkel (6a) der entsprechenden Schiene festgeklemmt ist, die äußere Klappe den Längsstreifen bedeckt und vorzugsweise auch die Öffnung (14) der Schiene bedeckt.

4. Vorrichtung nach einem der vorhergehenden Ansprüche, wobei wenigstens eine Klappe ein integraler Bestandteil der Abdeckung ist, wobei der Längsrand der Abdeckung ein freies Ende der wenigstens einen Klappe bildet.

5. Vorrichtung nach einem der vorhergehenden Ansprüche, wobei wenigstens eine Klappe von einem Band gebildet wird, das einen inneren Rand, der an der Abdeckung parallel zu jedem Längsrand der Abdeckung befestigt ist, und einen freien äußeren Rand, der das freie Ende der wenigstens einen Klappe bildet, umfasst.

6. Vorrichtung nach dem vorhergehenden Anspruch, wobei das Band an der Abdeckung durch Schweißen, Kleben, Nähen, Heften oder Nieten befestigt ist.

7. Vorrichtung nach einem der vorhergehenden Ansprüche, wobei der Längsstreifen (12) einschließlich des Wulstes ein Gewebe aus Polyethylenfasern mit ultrahoher Molmasse bzw. UHMPE, z. B. Dyneema, oder aus Polyethylenfasern mit hoher Dichte bzw. HDPE, oder aus Aramidfasern, z. B. Kevlar, Twaron, oder aus Fasern aus aromatischem Polyester, z. B. Vectran, umfasst und wobei der Stoff vorzugsweise geflochten oder gewebt oder gestickt ist.

8. Vorrichtung nach dem vorhergehenden Anspruch, wobei der Längsstreifen (12) an der Abdeckung durch Nähen, Kleben, Schweißen, Heften oder Nieten befestigt ist.

9. Vorrichtung nach einem der vorhergehenden Ansprüche, wobei das Verriegelungssystem außerdem zwei flexible Riemen (31) umfasst, von denen jeder geeignet ist,
• sich während der Translation der Trommel in der ersten Richtung beim Abwickeln der Abdeckung (10) nach und nach in der Öffnung (14) der entsprechenden Schiene abzulegen, nachdem der Wulst (12) unter dem angrenzenden Schenkel (6a) dieser Letzteren in Eingriff gebracht worden ist, und den Wulst somit dort festzuklemmen, und
• sich während der Translation der Trommel in der zweiten Richtung aus der Öffnung (14) zurückzuziehen, wodurch er den Wulst freigibt und ihm ermöglicht, sich beim Aufwickeln der Abdeckung nach und nach aus dem Eingriff zu lösen.

10. Vorrichtung nach dem vorhergehenden Anspruch, wobei der Bewegungsmechanismus einen Wagen (21) umfasst, der auf den Schienen (6) gelagert ist und die abzudeckende Oberfläche (3) in Querrichtung überragt und die Trommel (2) trägt ,und der an jedem seine Enden umfasst:
(a) ein Antriebsrad (9), dessen Drehachse parallel zu derjenigen der Trommel (2) ist;
(b) wenigstens eine erste nachgelagerte Laufrolle (33av) und wenigstens eine zweite vorgelagerte Laufrolle (33am), die auf den Schienen (6) ruhen und die Längstranslation des Wagens (21) ermöglichen und dem Antriebsrad (9) in der ersten Bewegungsrichtung nachgelagert bzw. vorgelagert sind und mit diesem ein Dreieck darstellen, in dem das Antriebsrad (9) einen oberen Scheitelpunkt bildet;
und wobei jeder der zwei flexiblen Riemen (31) ausschließlich an jedem seiner Enden (35) an den vier Ecken der abzudeckenden Oberfläche befestigt ist und sich entlang der Längsränder der abzudeckenden Oberfläche auf folgende Weise erstreckt:
(c) er läuft über die nachgelagerte Laufrolle (33av), welche ihn in der Öffnung der entsprechenden Schiene (6) ablegt, wenn sich der Wagen in der ersten Richtung D1 bewegt, und er läuft über die vorgelagerte Laufrolle (33am), welche ihn in der Öffnung der entsprechenden Schiene (6) ablegt, wenn sich der Wagen in der zweiten Richtung D2 bewegt,
(d) er ist in den seitlichen Abschnitten (31a), die zwischen einem Befestigungspunkt (35) und der diesem Befestigungspunkt nächstgelegenen Laufrolle (33av, 33am) liegen, in der Öffnung (14) der Schienen (6) angeordnet, und
(e) er läuft in dem mittleren Abschnitt (31b), der zwischen den zwei Laufrollen (33av, 33am) liegt, ohne Gleiten über das Antriebsrad (9).

11. Vorrichtung zur Abdeckung nach einem der vorhergehenden Ansprüche, wobei die Umlenkfläche wenigstens teilweise von einer Innenfläche einer Nut (52) gebildet wird, die in einem Einrastblock (50) angeordnet ist:
• wobei die Nut eine stirnseitige Öffnung aufweist, die sich auf einer zu der entsprechenden Schiene (6) parallelen Fläche erstreckt und der abzudeckenden Oberfläche zugewandt ist,
• wobei die Öffnung eine Breite aufweist, die kleiner als die Abmessung des Wulstes (12b) ist, der sich im Inneren der Nut befindet, und größer als die Dicke des Längsstreifens, der durch diese Öffnung aus der Nut austritt, so dass der Längsstreifen entlang der Nut gleiten kann, der Wulst jedoch nicht durch die stirnseitige Öffnung aus ihr austreten kann, und
• wobei die Nut einen gekrümmten Abschnitt umfasst, der es gestattet, den Wulst der Abdeckung (10) tangential in die Öffnung (14) und unter den angrenzenden Schenkel (6a) der entsprechenden Schiene zu führen.

12. Vorrichtung zur Abdeckung nach dem vorhergehenden Anspruch, wobei der Einsetzblock eine im Wesentlichen zylindrische Umlenkrolle (13) umfasst, die drehbar um eine zur Querrichtung der Abdeckung parallele Achse gelagert ist, wobei die Umlenkrolle ein distales Ende (13d), das von der abzudeckenden Oberfläche entfernt ist, und ein proximales Ende (13p), dass dieser Oberfläche benachbart ist, aufweist, und wobei der gekrümmte Abschnitt der Nut wenigstens teilweise von dem distalen Ende (13d) der Umlenkrolle gebildet wird, an welchem der entsprechende Wulst der Abdeckung anliegt, welche die Umlenkrolle (13) teilweise umhüllt, um ihre Ausrichtung zu ändern.

13. Vorrichtung zur Abdeckung nach Anspruch 12, wobei das distale Ende (13d) jeder Umlenkrolle (13), die sich beiderseits der abzudeckenden Oberfläche befindet, an dem entsprechenden Wulst (12b) anliegt, wobei es somit eine Zugspannung in der Querrichtung auf die Abdeckung bei ihrem Abwickeln ausübt, wobei diese Spannung bei der Verriegelung der Abdeckung (10) in den Schienen (6) aufrechterhalten wird.

14. Vorrichtung zur Abdeckung nach einem der Ansprüche 9 bis 11, welche außerdem ein Spannlager (15) umfasst, das an jedem Einrastblock (50) drehbar um eine quer verlaufende Drehachse gelagert ist, die vorzugsweise senkrecht zu den Querrändern der Abdeckung ist, und das den Wulst der Abdeckung in der Nut (13) des entsprechenden Einrastblockes führt.

15. Verwendung der Vorrichtung nach einem der vorhergehenden Ansprüche zum Abdecken einer Oberfläche (13), welche ausgewählt ist aus:
(a) einem mit einer Flüssigkeit gefüllten oder nicht gefüllten Becken, wie etwa einem Schwimmbad, einem Rückhalte-, Aufbereitungs- oder Entsalzungsbecken für Wasser;
(b) einem Sportplatz, wie etwa einem Tennis- oder Cricketplatz;
(c) einer Fahrzeugkarosserie;
(d) einer verglasten Fläche, wie etwa einem Gewächshaus, einem Wintergarten oder einem Fahrzeugfenster.

## Claims

1. Device (1) for covering a surface (3) comprising:
(a) a substantially rectangular cover (10) comprising an internal face and an external face which are separated from one another by the thickness of the cover, and having two longitudinal edges opposite one another and two transverse edges opposite one another,
(b) a longitudinal strip (12) comprising an interior edge (12i) being fixed to each longitudinal edge of the cover, and comprising an exterior edge which is free and equipped with a projecting bead (12b) extending along said edge,
(c) a drum (2) mounted with the ability to rotate able to roll up and unroll the cover (10), said drum (2) being mounted on a mechanism for longitudinal translation along
(d) rails (6) designed to be positioned one on each side of said surface (3) and each made up of a profiled section having an opening (14) on one of its faces and facing away from the surface that is to be covered, said face comprising at least one adjacent flange (6a) situated on the side adjacent to the surface that is to be covered and partially closing said opening (14), said translation mechanism allowing longitudinal translation of the drum in a first direction that causes the cover to be unrolled and deployed over the surface that is to be covered (3) with the internal face facing toward said surface and, in a second direction, that causes the cover to be rolled up and removed from said surface (3),
(e) a deflection surface provided on each side of the surface that is to be covered so as to guide and position said bead of each longitudinal strip of the cover to face the opening (14) in the corresponding rail (6) as the drum effects the translational movement in the first direction causing the cover to unroll,
(f) a system for continuously locking the bead (12b) of the longitudinal edges of the cover (10) in the opening (14) of said rails (6) making it possible, once the bead has been engaged in the opening, to lock it by wedging it under the adjacent flange (6a) of the corresponding rail as the cover (10) is gradually unrolled as the drum effects the translational movement in the first direction (D1), and, as the drum effects the translational movement in the second direction (D2), to release the bead, allowing it to disengage as the cover is gradually rolled up,
**characterized in that** the cover comprises at least one flap (15e, 15i) extending along each of its longitudinal edges and able, when a portion of each bead is wedged under the adjacent flange (6a) of the corresponding rail, to isolate the portion of the longitudinal strip that corresponds to the trapped bead portion either from the atmosphere prevailing between the internal face of the deployed cover portion and the surface portion covered, or from solar radiation.

2. Device according to Claim 1, comprising an internal flap (15i) extending from the internal face of the cover as far as a free end covering part of the longitudinal strip, without covering the bead, so that when the bead is wedged under the adjacent flange (6a) of the corresponding rail, said internal flap is compressed between the adjacent flange (6a) and the longitudinal strip, preferably without entering or covering the opening (14) in the rail, thus forming a relatively fluidtight seal.

3. Device according to Claim 1 or 2, comprising an external flap (15e) extending from the external face of the cover as far as a free end covering the longitudinal strip, including the bead, so that when the bead is wedged under the adjacent flange (6a) of the corresponding rail, said external flap covers the longitudinal strip and preferably also covers the opening (14) in the rail.

4. Device according to any one of the preceding claims, in which at least one flap is an integral part of the cover, the longitudinal edge of the cover forming a free end of the at least one flap.

5. Device according to any one of the preceding claims, in which at least one flap is formed by a tape comprising an internal edge fixed to the cover parallel to each longitudinal edge of the cover, and a free external edge forming the free end of the at least one flap.

6. Device according to the preceding claim, in which the tape is fixed to the cover by welding, bonding, stitching, stapling or riveting.

7. Device according to any one of the preceding claims, in which the longitudinal strip (12), including the bead, comprises a fabric made respectively of ultrahigh molecular weight polyethylene UHMPE fibers e.g. Dyneema, or respectively of high density polyethylene PEHD, fibers, or of aramid fibers e.g. Kevlar, Twaron or of aromatic polyester fibers e.g. Vectran, and in which the fabric is preferably braided or woven or embroidered.

8. Device according to the preceding claim, in which the longitudinal strip (12) is fixed to the cover by stitching, bonding, welding, stapling or riveting.

9. Device according to any one of the preceding claims, in which the locking system additionally comprises two flexible belts (31), each one being able
• during the translational movement of the drum in the first direction, to lay itself down in the opening (14) in the corresponding rail as the cover (10) is gradually unrolled once the bead (12) has been engaged under the adjacent flange (6a) of this rail, thus wedging it therein, and
• during the translational movement of the drum in the second direction, to remove itself from said opening (14), thus releasing the bead and allowing it to disengage as the cover is gradually rolled up.

10. Device according to the preceding claim, in which the movement mechanism comprises a carriage (21) mounted on the rails (6) and transversely overhanging the surface (3) that is to be covered and supporting the drum (2) comprising at each of its ends:
(a) a drive wheel (9), the axis of rotation of which is parallel to that of said drum (2);
(b) at least a first downstream roller (33av) and at least a second upstream roller (33am) resting on the rails (6) and allowing the longitudinal translational movement of the carriage (21) and which are mounted, the first one downstream and second one upstream of the drive wheel (9) in the first direction of travel and therewith constitute a triangle of which the drive wheel (9) forms a top vertex;
and in which each of the two flexible belts (31) is fixed only at each of its ends (35) to the four corners of the surface that is to be covered and extends along the longitudinal edges of the surface that is to be covered, as follows:
(c) it sits over the downstream roller (33av) which lays it down in the opening in the corresponding rail (6) as the carriage moves in the first direction D1, and it sits over the upstream roller (33am) which lays it down in the opening of the corresponding rail (6) when the carriage moves in the second direction, D2,
(d) it is laid down in the opening (14) in the rails (6) in the lateral sections (31a) comprised between a fixing point (35) and the roller (33av, 33am) closest to said fixing point, and
(e) it sits without slipping on the drive wheel (9) in the central section (31b) comprised between the two rollers (33av, 33am).

11. Covering device according to any one of the preceding claims, in which the deflection surface is at least partially formed of an interior surface of a slot (52) arranged in an engagement shoe (50):
• said slot having a face opening extending over a surface parallel to the corresponding rail (6) and facing toward the surface that is to be covered,
• said opening having a width less than the dimension of the bead (12b) located inside the slot and greater than the thickness of the longitudinal strip which comes out of the slot via said opening, so that the longitudinal strip can slide along the slot but the bead cannot leave the slot via the face opening, and
• said slot comprises a curved cross section allowing the bead of the cover (10) to be brought tangentially into the opening (14) and under the adjacent flange (6a) of the corresponding rail.

12. Covering device according to the preceding claim, in which the insertion shoe comprises a substantially cylindrical deflection pulley (13) mounted with the ability to rotate about an axis parallel to the transverse direction of the cover, said deflection pulley having a distal end (13d) distant from the surface that is to be covered, and a proximal end (13p) adjacent to said surface, and in which the curved cross section of the slot is formed at least in part by the distal end (13d) of the deflection pulley against which there presses the corresponding bead of the cover which is partially wrapped around said deflection pulley (13) so as to change orientation.

13. Covering device according to Claim 12, in which the distal end (13d) of each deflection pulley (13) situated on each side of the surface that is to be covered presses against the corresponding bead (12b), thus applying tension to the cover in the transverse direction as it is being unrolled, said tension being maintained as the cover (10) is being locked in the rails (6).

14. Covering device according to any one of Claims 9 to 11, additionally comprising a tensioning bearing (15) mounted with the ability to rotate on each engagement shoe (50), about an axis of rotation transverse, and preferably normal, to the transverse edges of the covering and which guides the bead of the covering into the slot (13) in the corresponding engagement shoe.

15. Use of a device according to any one of the preceding claims for covering a surface (3) selected from:
(a) a basin which may or may not be filled with a liquid, such as a pool, a water desalination, treatment or retaining basin;
(b) a sports ground, such as a tennis court or cricket pitch;
(c) a vehicle bodyshell,
(d) a glazed surface such as a greenhouse, a conservatory or a vehicle window.
